**Europäisches Patentamt**

**European Patent Office**

**Office européen des brevets**

(19)

(11) Veröffentlichungsnummer: **0 040 376**
**A1**

(12) **EUROPÄISCHE PATENTANMELDUNG**

(21) Anmeldenummer: **81103531.0**

(22) Anmeldetag: **08.05.81**

(51) Int. Cl.³: **G 01 N 29/00**
**A 61 B 10/00, G 01 S 7/52**
**G 01 S 15/10, H 04 R 17/00**

(30) Priorität: **21.05.80 DE 3019479**

(43) Veröffentlichungstag der Anmeldung:
**25.11.81 Patentblatt 81/47**

(84) Benannte Vertragsstaaten:
**AT BE CH DE FR GB IT LI NL SE**

(71) Anmelder: SIEMENS AKTIENGESELLSCHAFT Berlin
und München
Postfach 22 02 61
D-8000 München 22(DE)

(72) Erfinder: Diepers, Heinrich, Dr.
Veit-Stoss-Strasse 44
D-8552 Höchstadt/Aisch(DE)

(72) Erfinder: Vieth, Michael, Dipl.-Phys.
Holzschuherring 22
D-8520 Erlangen(DE)

(54) Ultraschallwandler-Array.

(57) Die Erfindung bezieht sich auf ein Ultraschallwandler-Array für die A-Bildtechnik durch Messung des zeitlichen Abstandes und der Amplitude der Echoimpulse. Erfindungsgemäß ist den Wandlerelementen (2 bis 6) jeweils ein Sender (22 bis 25) zugeordnet. Die Sender (22 bis 25) sind über eine Verzögerungskette (36) an einem Taktgeber (26) angeschlossen. Die Empfangsanordnung (40) enthält einen gemeinsamen Summierverstärker (58), der über jeweils ein Verzögerungsglied (72 bis 75) einer Verzögerungskette (76) an jeweils eines der Wandlerelemente angeschlossen ist. Die Umschaltung auf Senden oder Empfang erfolgt durch elektronische Umschalter (11 bis 14). Dieses Array stellt einen einfachen elektronischen Winkelscanner dar.

EP 0 040 376 A1

FIG 1

SIEMENS AKTIENGESELLSCHAFT
Berlin und München

Unser Zeichen
VPA 80 P 7 5 2 8 E

## Ultraschallwandler-Array

Die Erfindung bezieht sich auf ein Ultraschallwandler-Array mit Wandlerelementen, denen eine Elektronik zugeordnet ist, die den zeitlichen Abstand der Sende- und Echoimpulse sowie die Amplitude der Echoimpulse registriert.

In der zerstörungsfreien Werkstoffprüfung mit Ultraschall wird zur Einschallung unter einem bestimmten Winkel zur Oberfläche des zu prüfenden Werkstücks von der Brechung und Umwandlung der Wellenarten Gebrauch gemacht. Man benutzt dazu feste, keilförmige Zwischenstücke, sogenannte Winkelprüfköpfe, auf die der Wandler fest angedrückt oder aufgekittet wird. Der Keil kann auch einfach als anschraubbares Vorsatzstück für einen Normalprüfkopf ausgebildet sein und beispielsweise aus Plexiglas bestehen. Diese keilförmige Vorlaufstrecke bewirkt beim Schallübergang zwischen Vorlaufstrecke und Prüfkörper eine Brechung in die gewünschte Richtung und gegebenenfalls eine Wellenumwandlung, beispielsweise die Umwandlung einer einfallenden Longitudinal- in eine gebrochene Transversalwelle. Winkelprüfköpfe werden verwendet zur Fehlerortung in Werkstücken mit dem Impulsechoverfahren, bei dem die Tiefe des Fehlers aus dem zeitlichen Abstand zwischen Sende- und Echoimpuls und die Größe des Fehlers aus der Amplitude des Echoimpulses abgeleitet wird. Bei diesem Verfahren wird nicht der geortete Fehler, sondern lediglich der Sende- und Echoimpuls in einem sogenannten A-Bild auf einem Bildschirm sichtbar gemacht.

Kin 2 Koe / 18.4.1980

Da bei flächigen Fehlern die Reflexion meist in eine bestimmte Richtung erfolgt, sind mehrere Einschallwinkel erforderlich, um den Fehler zu orten und seine Orientierung im Werkstück festzustellen. Wenn Lage und Orientierung des Fehlers bekannt sind, kann mit einer Fokussierung des Schallfeldes eine genauere Bestimmung der Größe und Form des Fehlers vorgenommen werden. Die Ermittlung der Lage und Größe des Fehlers erfolgt durch Einsatz mehrerer Schallköpfe, wobei wenigstens vier Winkelrichtungen, je zwei Wandlergrößen und je zwei Frequenzen zum Einsatz kommen. Bei ungünstiger Lage und Orientierung des Fehlers können neben diesen 16 Schallköpfen noch weitere Winkel, Frequenzen oder Schwingergrößen erforderlich sein. Außerdem kann zur genaueren Bewertung des Fehlers auch noch eine Krümmung des Schwingers zur Fokussierung des Schallfeldes notwendig sein. Da immer nur ein Winkelprüfkopf an das Prüfgerät angeschlossen werden kann, ist somit ein vielfaches Abfahren des Prüfkörpers mit den einzelnen Schallköpfen erforderlich, was nur in verhältnismäßig langer Zeit möglich ist.

In der Radartechnik, Unterwasserortung und der medizinischen Ultraschalldiagnostik werden akustische, phasengesteuerte Strahlergruppen, sogenannte phased Arrays, eingesetzt, mit denen die Fehlerortung in verhältnismäßig kurzer Zeit möglich ist. Phased Arrays sind Ultraschallwandleranordnungen, bei denen die Wandlerelemente nach Phase und Amplitude unterschiedlich angeregt werden können. Durch Änderung der Amplituden- und Phasenansteuerung kann das Schallfeld beeinflußt werden. Durch lineare Laufzeitverzögerung ist ein Schwenken und durch eine symmetrische, quadratische Verzögerung auch ein Fokussieren des Schallfeldes möglich. Durch die Überlagerung einer linearen mit einer quadratischen Verzögerung wird das Schallfeld sowohl fokussiert als auch geschwenkt. Mit diesem Sector-Scanner wird ein Raumwinkel abgetastet, der dann auf einem Bildschirm als Schnittbild, als sogenanntes B-Bild, dargestellt wird. Mit diesem phased Array können zwar Normal- und Winkelprüfköpfe sowie fokussierende Köpfe durch einen einzigen Array-Prüfkopf ersetzt werden, diese Art der Fehlerdarstellung in einem Schnittbild erfordert jedoch einen erheblichen elektronischen Aufwand (US-PS 3 789 833).

Der Erfindung liegt ebenfalls die Aufgabe zugrunde, Winkelprüfköpfe und gegebenenfalls Prüfköpfe mit mechanischer Fokussierung durch ein Array zu ersetzen. Die Fehlerortung und Fehlerdarstellung nach dem Impulsechoverfahren soll jedoch mit geringem elektronischen Aufwand möglich sein.

Diese Aufgabe wird erfindungsgemäß gelöst durch die kennzeichnenden Merkmale nach dem Patentanspruch 1. Die Abstrahlfläche der Wandlerelemente ist parallel zur Oberfläche des Werkstücks angeordnet. Durch die elektronische Umschaltung sind die Wandlerelemente im Sende- und auch im Empfangsfall getrennt elektronisch ansteuerbar. Durch die Glieder der Verzögerungskette werden die einzelnen Wandlerelemente jeweils mit zunehmender Verzögerung derartig angesteuert, daß die Wellenfront unter einem der Verzögerung entsprechenden Winkel zum Wandlerarray steht. Die Strahlkeule der Array-Antenne ist somit zum Array geneigt. Durch beispielsweise kontinuierlich steuerbare Verzögerung der Wandlerelementanregung können beliebige Abstrahlwinkel eingestellt werden. In entsprechender Weise werden im Empfangsfall die an den Wandlerelementen registrierten Empfangssignale so verzögert, daß die unter einem bestimmten Winkel ankommenden Signale wiederum phasenrichtig dem Summierverstärker zugeführt und anschließend nach dem Impulsechoverfahren in der bekannten A-Bildtechnik dargestellt werden können. Zur Einstellung
eines vorbestimmten Abstrahlwinkels ist somit eine fest
vorgegebene lineare Verzögerung der Sendesignale und
eine mit den Wandlerelementen verbundene feste Gruppe
von Verzögerungsleitungen erforderlich.

Eine besondere Ausführungsform der Ultraschallwandleranordnung besteht darin, daß die Sende- und Empfangsanordnung für die Wandlerelemente jeweils einen Wahlschalter für Verzögerungsglieder verschiedener Einschallungswinkel enthält, mit denen eine Umschaltung
auf einen vorbestimmten Winkel automatisch vorgenommen
werden kann.

Eine Winkeleinstellung mit zusätzlicher Fokussierung ist
dadurch möglich, daß die Empfangsanordnung mit einer
zusätzlichen Verzögerungskette versehen wird. Ist ausschließlich eine Fokussierung vorgesehen, so werden die
Verzögerungsglieder für die Winkeleinstellung überbrückt.
Soll ausschließlich eine Winkeleinstellung erforderlich
sein, so können auch die zusätzlichen Verzögerungsglieder für die Fokussierung überbrückt werden.

In einer besonderen Ausführungsform der Ultraschallwandleranordnung bestehen die Wandlerelemente jeweils aus
einer Zeile von Einzelelementen, die an eine gemeinsame
Steuerleitung angeschlossen sind. Mit dieser Matrix von
Wandlerelementen des Ultraschall-Arrays kann jeweils in
einem einzigen Arbeitsgang ein größerer Raumwinkel des
Werkstücks geprüft werden.

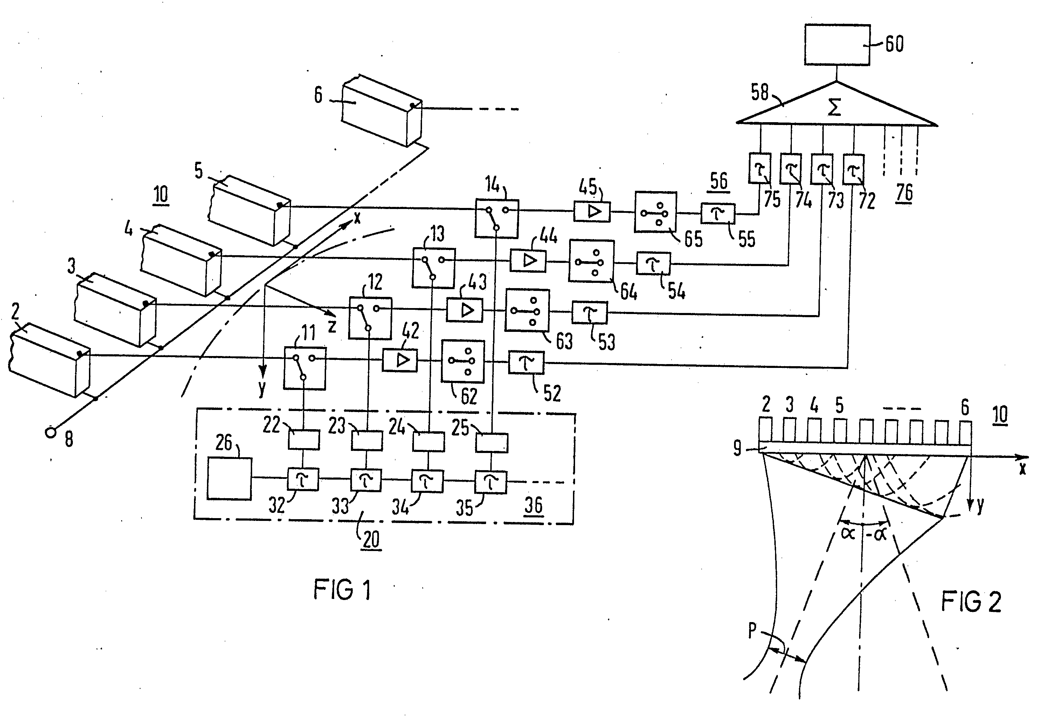

Zur weiteren Erläuterung der Erfindung wird auf die
Zeichnung Bezug genommen, in deren Figur 1 ein Ausführungsbeispiel einer Ultraschallwandleranordnung nach
der Erfindung mit einer Elektronik schematisch veranschaulicht ist, mit der eine Einschallung unter verschiedenen Winkeln mit einem fokussierten Schaltbild
und die Darstellung eines gefundenen Fehlers nach dem
Impulsechoverfahren schematisch veranschaulicht ist.

In Figur 2 ist das elektronische Schwenken und Fokussieren dargestellt.

In der Ultraschallwandleranordnung nach Fig. 1 sind
Wandlerelemente in ihrer Längsrichtung parallel nebeneinander und in Richtung ihrer Breite derart hintereinander angeordnet, daß sie einen sogenannten Wandlerkamm
bilden, der aus einer großen Anzahl von Wandlerelementen bestehen soll, von denen in der Figur zur Vereinfachung lediglich einige dargestellt und mit 2 bis 6
bezeichnet sind. Die einzelnen Wandlerelemente sind
jeweils über einen elektronischen Umschalter 11 bis 14
sowohl an eine Sendeanordnung 20 als auch an eine
Empfängeranordnung 40 angeschlossen. Die Sendeanordnung
20 enthält für die einzelnen Wandlerelemente jeweils
einen Sender, die in der Figur mit 22 bis 25 bezeichnet
sind, und einen gemeinsamen Taktgeber 26, der über Verzögerungsglieder 32 bis 35 einer elektronischen Verzögerungskette 36 an die einzelnen Sender 22 bis 25
angeschlossen ist.

Die Empfangsanordnung 40 enthält für die einzelnen Wandlerelemente 2 bis 5 jeweils einen Vorverstärker 42 bis
45 und jeweils ein Verzögerungsglied 52 bis 55 einer
Verzögerungskette 56. Die Ausgangssignale der Verzögerungskette 56 werden einem Summierverstärker 58 zugeführt und können auf einem Bildschirm 60 als Impuls-
Echobild, sogenanntes A-Bild, sichtbar gemacht werden.

Die Abstrahlfläche der Wandlerelemente 2 bis 6 ist
parallel zur Oberfläche eines in der Figur nicht dargestellten Werkstücks angeordnet. Die Wandlerelemente 2 bis 6 sind sowohl im Sende- als auch im Empfangsfall
über die elektronischen Umschalter 10 bis 14 getrennt
elektronisch ansteuerbar. Die Wandlerelemente 2 bis 5
werden von den Sendern 22 bis 25 angeregt, wobei eine
zeitliche Verzögerung der Sendesignale in der X-Richtung
nach der Figur 2 dazu führt, daß die von den Wandlerelementen ausgehenden Signale eine Wellenfront bilden,
die unter einem der Verzögerung entsprechenden Winkel $\alpha$
zum Array 10 steht. Die Strahlkeule der Array-Antenne
ist somit zum Array 10 geneigt. Durch kontinuierlich
steuerbare Verzögerung der Wandlerelemente 2 bis 6
können beliebige Abstrahlwinkel eingestellt werden.
Entsprechend werden im Empfangsfall die an den Wandlerelementen 2 bis 6 registrierten Empfangssignale mit
Hilfe der Verzögerungskette 56 so verzögert, daß die
unter einem vorbestimmten Winkel ankommenden Signale
wiederum phasenrichtig dem Summierverstärker 58 zugeführt und anschließend in der A-Bildtechnik auf dem
Bildschirm 60 dargestellt werden können. Zur Einstellung
eines vorbestimmten Strahlwinkels $\alpha$ ist also einmal eine
fest vorgegebene lineare Verzögerung der Sendesignale
durch die Verzögerungskette 36 und außerdem eine mit
den Wandlerelementen 2 bis 6 verbundene Verzögerungskette 56 in der Empfangsanordnung 40 erforderlich.

Soll nacheinander unter mehreren Strahlwinkeln $\alpha$ gemessen werden, so ist für jeden Strahlwinkel durch Wahlschalter 62 bis 65 eine eigene Gruppe von Sende- und
Empfangsverzögerungsgliedern anzuwählen. Eine entsprechende Kette von Wahlschaltern kann zweckmäßig auch im
Sender 20 enthalten sein. Die Einschallung in das zu
prüfende Werkstück unter den verschiedenen Abstrahlwinkeln $\alpha$ erfolgt somit immer mit dem gleichen Array 10.

Die Umschaltung zwischen mehreren festgewählten Schallwinkelrichtungen $\alpha$ für Sende- und Empfangsbetrieb kann vorzugsweise automatisch erfolgen, und zwar mit so niedriger Frequenz, daß eine Beobachtung und Verwertung der A-Bildanzeige auf dem Bildschirm 60 möglich ist.

Tritt unter einem vorbestimmten Winkel $\alpha$ eine Echoanzeige auf, so kann der automatische Durchlauf der Schallwinkelrichtungen $\alpha$ entweder manuell oder bei Über- oder Unterschreiten eines vorbestimmten Signalpegels innerhalb einer einstellbaren Monitorblende angehalten werden.

Durch Zu- oder Abschaltung von am Rand der Gesamtschwingerfläche liegenden Wandlerelementen kann die Abstrahlfläche des Arrays 10 und somit die Form des Schallfeldes und die Lage des natürlichen Fokuspunktes P in den einzelnen Winkellagen verändert werden. Insbesondere kann bei zunehmendem Schwenkwinkel $\alpha$ die für das Schallfeld wirksame Abstrahlfläche, die der Projektion der Wandlerfläche in die Schwenkrichtung entspricht, konstantgehalten werden.

Eine besonders hohe Auflösung erhält man dadurch, daß zu der linearen Verzögerung der Verzögerungsglieder 52 bis 55 der Verzögerungskette 56 eine quadratische Verzögerung hinzugeschaltet wird. Zu diesem Zweck ist für die Wandlerelemente des Arrays 10 jeweils ein zusätzliches Verzögerungsglied 72 bis 75 einer zusätzlichen Verzögerungskette 76 vorgesehen. Damit erhält man in den verschiedenen Strahlrichtungen $\alpha$ in einer vorbestimmten Tiefe im zu prüfenden Objekt eine stärkere, über den sogenannten natürlichen Fokus hinausgehende Bündelung, d.h. eine Fokussierung des Schallfeldes in der X-Y-Ebene, wie es in Figur 2 angedeutet ist.

In einer einfachen Ausführungsform der Ultraschallwandleranordnung kann es ausreichend sein, wenn die Fokussierung nur innerhalb der Empfangsanordnung 40 vorgenommen wird, wie es in Figur 1 dargestellt ist. Die Fehlerauflösung kann jedoch noch gesteigert werden, wenn auch im Sendefall eine Fokussierung überlagert wird. In diesem Fall wird auch die Sendeanordnung 20 mit einer in der Figur nicht dargestellten zusätzlichen Verzögerungskette versehen.

In der Darstellung nach Figur 2 wurde angenommen, daß die Verzögerung der Sende- und Empfangssignale der Wandlerelemente 2 bis 6 in der X-Richtung zunehmend erfolgt. Erhalten die Wandlerelemente 2 bis 6 Signale mit in der X-Richtung abnehmender Verzögerung, so erhält man eine Schwenkung des Schallfeldes mit negativem Abstrahlwinkel, was in der Figur durch $-\alpha$ angedeutet ist.

In einer besonderen Ausführungsform der Ultraschallwandleranordnung werden die Verzögerungsketten 36 und 56 bzw. 76 nicht als fest vorgegebener Baustein eingesetzt und durch einfaches Umschalten von Hand oder automatisch angewählt, sondern für alle Abstrahlwinkel $\alpha$ wird nur eine Reihe von Verzögerungsgliedern oder Verzögerungsketten vorgesehen, und die Verzögerungszeiten werden entsprechend dem gewünschten Winkel elektronisch gesteuert.

Darüber hinaus ist eine Steuerung als sogenannter Mitlauffokus möglich, indem die Lage des Fokuspunktes P stufenlos entlang der in Figur 2 für einen vorbestimmten Abstrahlwinkel $\alpha$ strichpunktiert angedeuteten normale zur Wellenfront abgefahren wird. Der Fokuspunkt P wird somit entsprechend der Schallgeschwindigkeit mitgefahren. Wird beispielsweise ein Winkel $\alpha$ von 30° eingestellt und in dieser Stellung mit jedem Pulslauf der Fokus etwa kontinuierlich entlang dieser 30°-Strahlrichtung durchgefahren, so springt der Winkel nach einer Haltezeit von beispielsweise 0,2 s auf den nächsten Winkel von beispielsweise 60° und das Fokuslaufspiel wiederholt sich entsprechend. Auf diese Weise kann beispielsweise nach dem Auffinden eines Fehlers dieser unter einer vorbestimmten Winkellage stationär beobachtet werden, durch Anhalten der Lage des Fokuspunktes B in Höhe der Fehlerlage analysiert und bewertet werden. Eine weitere Ausgestaltung dieses Winkelscanner-Systems besteht darin, die linearen Verzögerungsglieder der Verzögerungsketten 36 und 56 vorübergehend auszuschalten und nur die zusätzliche Verzögerungskette 76 in der Empfangsanordnung 40 sowie gegebenenfalls eine zusätzliche Verzögerungskette in der Senderanordnung 20 zur Fokusbildung zu verwenden. Dies erfolgt dann in der Normalprüflage senkrecht zum Fokuskopf. Damit wird aus dem Winkelscanner ein beispielsweise dynamisch im Mitlauf fokussierender Normalprüfkopf.

Eine weitere Ausführungsform der Ultraschallwandleranordnung besteht darin, daß zwischen den Wandlerelementen 2 bis 6 und dem zu prüfenden Werkstück eine wenigstens annähernd planparallele Vorlaufstrecke 9 vorgesehen ist, die aus einem Material besteht, dessen Schallgeschwindigkeit sich von der Schallgeschwindigkeit des Werkstücks erheblich unterscheidet. Wird nun dem Sende- und Empfangsfall der Schallstrahl mit festen Verzögerungszeiten unter einem vorbestimmten Winkel in die Vorlaufstrecke 9 eingespeist, so kommt es an der Grenzfläche zwischen der Vorlaufstrecke 9 und dem nicht näher bezeichneten Werkstück durch die unterschiedlichen Schallgeschwindigkeiten zu einer Brechung der Schallstrahlrichtung und bei vorbestimmter Wahl des Vorlaufmediums und des Strahlwinkels in der Vorlaufstrecke zur Umwandlung der Longitudinal- in eine Transversalwelle beim Eintritt der Welle in das Werkstück. Auch in dieser Ausführungsform kann die Umschaltung zwischen mehreren festgewählten Schallwinkelrichtungen der Longitudinal-
oder Transversalwelle automatisch erfolgen, so daß ohne
Auswechseln des Prüfkopfes eine Fehlerortung unter verschiedenen Richtungen möglich ist. Als Material für die
Vorlaufstrecke 9 ist beispielsweise Polymethylmetacrylat (Plexiglas) oder ein verwandter Kunststoff geeignet,
sofern eine Schallstrahlbrechung erwünscht ist. Mit
einer derartigen Vorlaufstrecke 9 erfolgt im zu untersuchenden Werkstück, beispielsweise aus Stahl, eine
Strahlbrechung vom strichpunktiert angedeuteten Lot weg.
Es können somit auch Fehler unter einem Winkel $\alpha > 45°$
mit hoher Empfindlichkeit angezeigt werden. Ohne die
Vorlaufstrecke 9 und ohne Strahlbrechung kann sich
nämlich bei einem Winkel $\alpha > 45°$ eine Abnahme der
Empfindlichkeit ergeben.

Bei Verwendung der Vorlaufstrecke 9 ergibt sich zusätzlich der Vorteil, daß die durch die Länge der Sendepulse bedingte Totzeit, innerhalb derer im Werkstück
keine Ortung möglich ist, wenigstens teilweise reduziert oder ganz aufgehoben wird.

Wird keine Brechung benötigt, so kann als Material
Glaskeramik (Macor) oder Glaskohlenstoff (Sigradur-K)
oder auch ein metallisches Material, beispielsweise
Messing, gewählt werden, das noch eine bessere akustische Anpassung an den zu untersuchenden Werkstoff,
beispielsweise Stahl, ermöglicht. Zur Abdämpfung von an
der Grenzfläche zwischen der Vorlaufstrecke 9 und dem
Werkstück reflektierten Störsignalen können die freien
Seitenwände der Vorlaufstrecke 9 durch Einkerbungen
und/oder Aufbringen von Dämpfungsmaterialien als
"akustischer Sumpf" ausgebildet werden.

Zusätzlich zu den gewählten schrägen Einschallrichtungen
kann auch die Einschallung einer Longitudinalwelle in senkrechter Richtung vorgesehen sein, indem alle Wandlerelemente 2 bis 6 ohne Verzögerung im Sende- und Empfangsfall angeregt werden. Eine höhere Fokussierung erhält man dadurch, daß die Einzelschwinger mit einer quadratischen Verzögerungskennlinie angesteuert werden. Wenn mehrere quadratische Verzögerungskennlinien zur Verfügung stehen, so können die einzelnen Verzögerungsgruppen automatisch durchgetaktet werden. Durch Zu- und Abschaltung von am Rande des Arrays 10 liegenden Wandlerelementen kann die Abstrahlfläche des Arrays 10 und somit die Form des Schallfeldes und die Lage des Fokuspunktes auf der Flächennormale der Wandleroberfläche verändert werden.

Wird die Einschallung vorzugsweise in einem bestimmten Grundwinkel $\alpha_1$ gewünscht und soll die Strahlschwenkung nur in festen Beträgen $\Delta\alpha$ um diesen Grundwinkel $\alpha_1$ erfolgen, wobei $\Delta\alpha \ll \alpha_1$ ist, so kann statt der in Figur 2 dargestellten planparallelen Vorlaufstrecke 9 auch eine keilförmige Vorlaufstrecke eingesetzt werden. Der Neigungswinkel des Keils und des Materials des Keils werden dann so gewählt, daß an der Grenzfläche zwischen Keilmaterial und Werkstück eine Brechung in den gewünschten Grundwinkel $\alpha_1$ und gegebenenfalls eine Wellenmodenumwandlung erfolgt.

12 Patentansprüche
4 Figuren

Patentansprüche

1. Ultraschallwandleranordnung mit Wandlerelementen, denen eine Elektronik zugeordnet ist, die den zeitlichen Abstand und die Amplitude der Echoimpulse registriert, g e k e n n z e i c h n e t  durch die Merkmale, daß

a) den Wandlerelementen (2 bis 6) jeweils ein Sender (22 bis 25) zugeordnet ist, die über eine Verzögerungskette (36) an einem Taktgeber (26) angeschlossen sind, und daß

b) eine Empfangsanordnung (40) mit einem gemeinsamen Summierverstärker (58) vorgesehen ist, der über jeweils ein Verzögerungsglied (52 bis 55) einer Verzögerungskette (56) an die einzelnen Wandlerelemente (2 bis 5) angeschlossen ist, und daß

c) den Wandlerelementen (2 bis 6) jeweils ein elektronischer Umschalter (11 bis 14) für Senden und Empfang zugeordnet ist.

2. Ultraschallwandleranordnung nach Anspruch 1, d a d u r c h  g e k e n n z e i c h n e t , daß die Empfangsanordnung (40) für die Wandlerelemente (2 bis 6) jeweils einen Wahlschalter (62 bis 65) für Verzögerungsglieder verschiedener Einschallungswinkel (∝) enthält.

3. Ultraschallwandleranordnung nach Anspruch 1 oder 2, d a d u r c h  g e k e n n z e i c h n e t , daß die Empfängeranordnung (40) für jedes der Wandlerelemente (2 bis 6) ein zusätzliches Verzögerungsglied (72 bis 75) einer zusätzlichen Verzögerungskette (76) enthält.

4. Ultraschallwandleranordnung nach Anspruch 3, d a d u r c h  g e k e n n z e i c h n e t , daß zusätzliche Verzögerungsglieder (72 bis 75) mit quadratischer Verzögerung vorgesehen sind.

5. Ultraschallwandleranordnung nach Anspruch 1 oder 2, d a d u r c h   g e k e n n z e i c h n e t ,　daß die Sendeanordnung (20) für jeden der Ultraschallwandler (2 bis 6) ein zusätzliches Verzögerungsglied einer zusätzlichen Verzögerungskette enthält.

6. Ultraschallwandleranordnung nach Anspruch 5, d a d u r c h   g e k e n n z e i c h n e t ,　daß Verzögerungsglieder mit quadratischer Verzögerung vorgesehen sind.

7. Ultraschallwandleranordnung nach einem der Ansprüche 3 bis 6, d a d u r c h   g e k e n n z e i c h n e t , daß für die Verzögerungsglieder der zusätzlichen Verzögerungskette jeweils eine Überbrückung vorgesehen ist.

8. Ultraschallwandleranordnung nach einem der Ansprüche 3 bis 7, d a d u r c h   g e k e n n z e i c h n e t , daß die zusätzlichen Verzögerungsglieder der zusätzlichen Verzögerungsketten jeweils mit einer Überbrückung versehen sind.

9. Ultraschallwandleranordnung nach einem der Ansprüche 1 bis 8, d a d u r c h   g e k e n n z e i c h n e t , daß mehrere parallel zueinander angeordnete Wandlerelemente jeweils über eine gemeinsame Steuerleitung an einem Sender oder Empfänger anschließbar sind.

10. Ultraschallwandleranordnung nach einem der Ansprüche 1 bis 9, d a d u r c h   g e k e n n z e i c h n e t , daß die Wandlerelemente 2 bis 6 mit einer Vorlaufstrecke (9) versehen sind.

11. Ultraschallwandleranordnung nach Anspruch 10, d a d u r c h   g e k e n n z e i c h n e t ,　daß die den Wandlerelementen (2 bis 6) zugewandte Flachseite der Vorlaufstrecke (9) planparallel sind.

12. Ultraschallwandleranordnung nach Anspruch 10, **d a d u r c h  g e k e n n z e i c h n e t ,** daß die den Wandlerelementen (2 bis 6) zugewandte Flachseite und die dem Werkstück zugewandte Flachseite der Vorlaufstrecke (9) zueinander geneigt sind.

FIG 2

FIG 1

Europäisches
Patentamt
EUROPÄISCHER RECHERCHENBERICHT
Nummer der Anmeldung
EP 81103531.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 713 087 (VARIAN) <br> + Fig. 1,5 + <br> -- | 1 |
| | DE - B2 - 2 543 678 (TOKYO) <br> + Fig. 1 + <br> -- | 1,3-6 |
| | DE - A1 - 2 902 507 (TOKYO) <br> + Fig. 1,2 + <br> -- | 1,2 |
| | DE - A1 - 2 718 772 (TOKYO) <br> + Fig. 1,5 + <br> -- | 1,10,11 |
| A | DE - B2 - 2 651 786 (HITACHI) <br> + Fig. 3; Spalte 5, Zeilen 52-57 + <br> -- | 1,2,7,8 |
| | US - A - 4 122 725 (THOMPSON) <br> + Fig. 3 + <br> -- | 9 |
| A | GB - A - 1 480 452 (FIAT) <br> + Fig. + <br> -- | 1 |
| | US - A - 3 513 439 (EGLI) <br> + Fig. 4; Spalte 4, letzter Absatz + <br> -- | 10,11 |

**KLASSIFIKATION DER ANMELDUNG (Int. Cl.³)**

G 01 N 29/00
A 61 B 10/00
G 01 S 7/52
G 01 S 15/10
H 04 R 17/00

**RECHERCHIERTE SACHGEBIETE (Int. Cl.³)**

G 01 N 29/00
A 61 B 10/00
G 01 S 7/00
G 01 S 15/00
H 04 R 17/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 24-07-1981 | BURGHARDT |

EPA form 1503.1 06.78

0040376

Nummer der Anmeldung

EP 81103531.0

Europäisches
Patentamt

## EUROPÄISCHER RECHERCHENBERICHT

| EINSCHLÄGIGE DOKUMENTE | | KLASSIFIKATION DER ANMELDUNG (Int. Cl.³) |
|---|---|---|
| Kategorie | Kennzeichnung des Dokuments mit Angabe, soweit erforderlich, der Maßgeblichen Teile | betrifft Anspruch |
| | JOSEF u. HERBERT KRAUTKRÄMER, Werkstoffprüfung mit Ultraschall, 1. Auflage, 1961, SPRINGER-VERLAG, Berlin/Göttingen/Heidelberg, Seiten 187,188<br><br>+ Abbildung 2.54a; Seite 188, 1. Absatz +<br><br>---- | 10,12 | |

RECHERCHIERTE
SACHGEBIETE (Int. Cl.³)

EPA Form 1503.2  06.78